# EUROPEAN PATENT SPECIFICATION

(11) **EP 0 949 123 B1**
(45) Date of publication and mention of the grant of the patent: **01.09.2004**
(21) Application number: 99106555.8
(22) Date of filing: 30.03.1999
(51) Int. Cl.: B60R 21/16

(54) **Airbag for front passenger and folding method thereof**
Frontpassagierairbag sowie Faltverfahren hierfür
Coussin de sécurité pour passager avant et sa méthode de pliage

(30) Priority: 08.04.1998 JP 11136898
(43) Date of publication of application: 13.10.1999
(73) Proprietor: TAKATA CORPORATION, Shiga 529-1388 (JP)
(72) Inventor: Igawa, Tadahiro, c/o Takata Corporation, Echi-gun, Shiga 529-1388 (JP)
(74) Representative: VOSSIUS & PARTNER

(56) References cited:
- US-A- 5 240 282
- US-A- 5 538 281
- PATENT ABSTRACTS OF JAPAN vol. 018, no. 653 (M-1720), 12 December 1994 (1994-12-12) & JP 06 255437 A (TAKATA KK;OTHERS: 01), 13 September 1994 (1994-09-13)
- PATENT ABSTRACTS OF JAPAN vol. 018, no. 653 (M-1720), 12 December 1994 (1994-12-12) & JP 06 255438 A (TAKATA KK;OTHERS: 01), 13 September 1994 (1994-09-13)
- PATENT ABSTRACTS OF JAPAN vol. 098, no. 001, 30 January 1998 (1998-01-30) & JP 09 226497 A (TOYO TIRE &RUBBER CO LTD; TOYOTA MOTOR CORP), 2 September 1997 (1997-09-02)
- PATENT ABSTRACTS OF JAPAN vol. 018, no. 544 (M-1688), 18 October 1994 (1994-10-18) & JP 06 191362 A (TOYO TIRE & RUBBER CO LTD), 12 July 1994 (1994-07-12)

## Description

The present invention relates to an airbag and to a method of folding an airbag which is deployed to protect an occupant in the event of vehicle emergency. More particularly, the present invention relates to a method of folding an airbag which can provide suitable deployment of the airbag to secure sufficient ability for restraining an occupant and which is improved on the smoothness of the deployment.

There are various methods generally employed for folding an airbag.

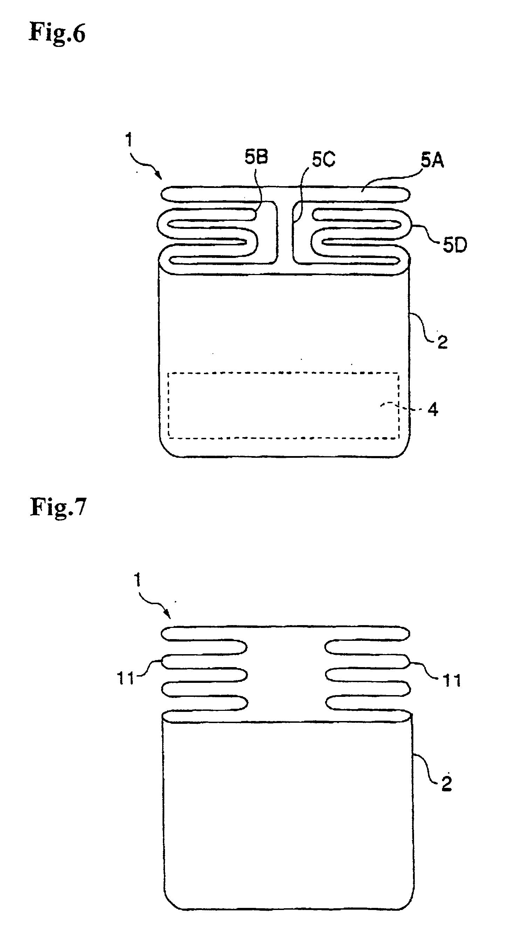

Fig. 7 is a sectional view of an airbag for a front passenger (hereinafter, referred to as "passenger airbag") which is folded in one of conventional folding methods. In Fig. 7, right and left side edges 11, 11 of a bag 1 are folded in bellows. The bag 1 is folded to have a width to correspond to the width of an airbag case 2 so that the bag 1 can be accommodated in the airbag case 2

It is desired, however, to provide improved folding methods of various types, in particular, for a passenger airbag, which is deployed through an upper portion of an instrument panel and is inflated toward an upper side of an occupant in a front passenger seat.

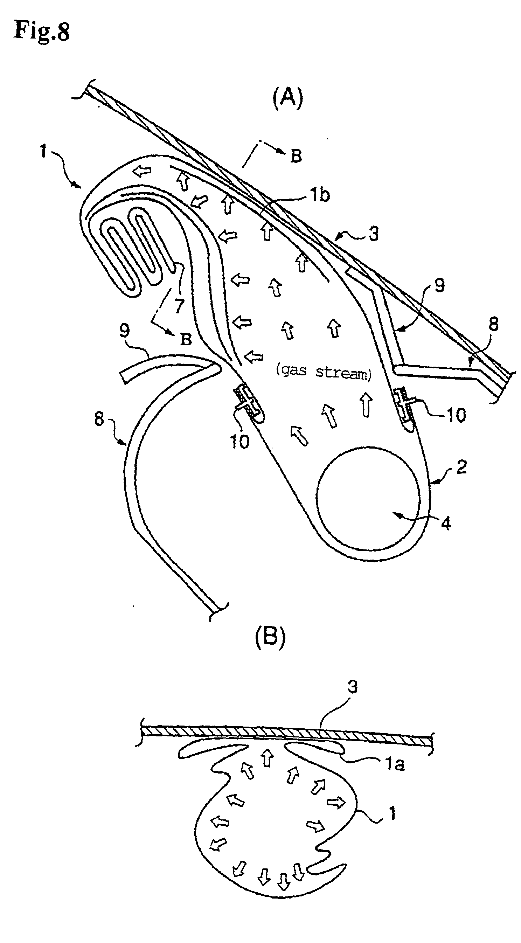

Figs. 8(A) and 8(B) show a passenger airbag which has been folded in a conventional method, in its deployment state. Fig. 8(A) is a side sectional view and Fig. 8(B) is a view taken along a section B-B of Fig 8(A). Referring to Figs. 8(A), 8(B), as an inflator 4 disposed within the airbag case 2 generates gas and the gas enters into the bag 1 as shown by arrows, an airbag cover 9 arranged at an instrument panel 8 is broken by the inner pressure of the bag 1 so that the bag 1 is deployed above the instrument panel 8. In this state, as shown in Fig. 8(B), an upper portion 1a of the bag 1, which is positioned near a windshield glass (hereinafter, referred as to "windshield" or "glass") 3, strikes a windshield 3 when the upper portion 1a is still in the folded state. In the passenger airbag, folded in the conventional method, it can not be predicted how to the deploying bag 1 strikes the windshield 3, so there is a possibility that the glass is subjected to undesired local pressure. In order to prevent the application of undesired local pressure on the glass, various measures have been taken, for example, reducing the output of the inflator, adjusting the mount position of the bag 1 and/or the angle for mounting the airbag case 2, and increasing the strength of the windshield 3. These measures impair the working efficiency of assembling the passenger airbag and increase the cost.

US-A-5538281 discloses a method of folding an airbag according to the preamble of claim 1.

The present invention was made in order to solve the above problem and the object of this invention is to provide a passenger airbag which can provide suitable deployment to secure sufficient ability for restraining an occupant and which is improved on the smoothness of the deployment, and to provide a folding method used therefor. This object is achieved with the features of the claims.

The airbag according to the invention starts its deployment from the part on the windshield side and the windshield is struck by a portion of the bag, which has been inflated with released fold, thereby dispersing and thus reducing the pressure on the windshield.

Since in the method according to the invention the larger number of the rolled or folded portions are formed on the opposite side of the windshield side, the bag starts its deployment from a part on the windshield side and the rolled or folded bodies of the bag are prevented from being directed toward the windshield.

Since the looseness is formed at the center in the lateral direction on the windshield side and the right and left edges are folded or rolled toward the center of the part on the opposite side of the windshield side, gas is apt to flow into the looseness on the windshield side during its deployment so that the bag starts its deployment from the part on the windshield side. Further, the windshield is struck by the portion of the bag, which is sufficiently inflated with released fold, thereby reducing the pressure on the windshield. The tip of the bag is folded or rolled up to the opposite side of the windshield side, thereby preventing the folded or rolled body of the bag from being directed toward the windshield during the deployment of the bag.

As apparent from this description, the present invention can provide a passenger airbag which can provide suitable deployment to secure sufficient ability for restraining an occupant, which is improved on the smoothness of the deployment, and which undesired pressure on a glass can be prevented without increasing the cost, and to provide a folding method used therefor.

Hereinafter, the present invention will be described with reference to attached drawings.
Figs. 1(1A)-1(4A) are views illustrating a folding process according to a method of folding an airbag of an embodiment of the present invention.
Fig 2 is a view showing the configuration of the airbag shown in Figs. 1(1A)-1(4A), at a point during the deployment.
Fig 3 is a sectional view of the airbag at the point during the deployment of Fig. 2.
Fig. 4 is a front view showing a variation relative to the method of folding the airbag of the embodiment shown in Figs. 1(1A)-1(4A).
Fig. 5 is a front view showing another variation relative to the method of folding the airbag of the embodiment shown in Figs. 1(1A)-1(4A).
Fig. 6 is a front view showing further another variation relative to the method of folding the airbag of the embodiment shown in Figs. 1(1A)-1(4A).
Fig. 7 shows a section of a passenger airbag which is folded in a conventional method.
Figs. 8(A) and 8(B) show the passenger airbag, which is folded in the conventional method, at a point during the deployment of the airbag.

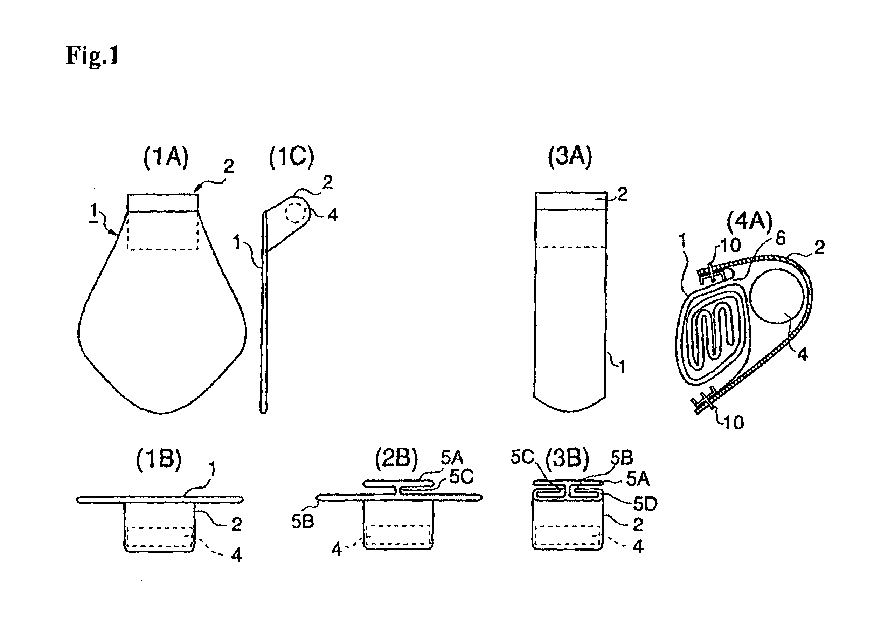

Fig. 1(1A) is a plan view of the bag 1 taken from the upper side, Fig. 1(1B) is a front view of the bag 1 taken from a side confronting a windshield, Fig. 1(1C) is a side view of the bag 1 taken from a lateral side thereof. In these drawings, the bag 1 is not folded yet and spreads. The bag 1 is formed in a tongue-like shape in its plan view. The end of the bag 1 positioned near the windshield (the upper side in Figs. 1(1A), 1(1C)) is fixed to an airbag case 2 to be installed in an instrument panel. Arranged within the airbag case 2 is an inflator 4 for generating gas to deploy the bag 1.

Fig. 1(2B) is a front view taken from the side confronting the windshield, illustrating a first stage of the folding process. In the first stage of the folding process, an upper portion of the bag 1 about the center in the lateral direction thereof is picked up to form a looseness 5A in such a manner as to form concavities 5C, 5C beneath the looseness 5A. In this state, edges 5B, 5B of the bag 1 are therefore moved slightly toward the center. The looseness 5A on the windshield side (the upper side in the drawing) has a width allowing to be accommodated in the airbag case 2. The width of the looseness 5A is set to be nearly equal to the inner width of the airbag case 2. On the other hand, the width formed together by the edges 5B, 5B of the bag 1 on the opposite side of the windshield side (the lower side in the drawing) is larger than the width of the looseness 5A.

Figs. 1(3A) and 1(3B) illustrate the second stage of the folding process, wherein Fig 1(3A) is a plan view of the bag 1 taken from the upper side and Fig 1(3B) is a front view of the bag 1 taken from the side confronting the windshield. As shown in Figs. 1(3A) and 1(3B), the edges 5B, 5B of the bag 1 are folded to enter the concavities 5C, 5C which are formed beneath the looseness 5A. That is, the edges 5B, 5B are folded by being directed toward the inside of the concavities 5C, 5C, in such a manner as to form folded bodies 5D, 5D, respectively, on the opposite side of the windshield side. The width formed together by the folded bodies 5D, 5D may be equal to or smaller than the width of the looseness 5A. It should be noted that the edges 5B, 5B may be folded in plural times.

Works caused by folding the edges 5B, 5B on the opposite side of the windshield side (the lower side in the drawing) into the concavities 5C, 5C of the looseness 5A are as follows. During the deployment of the bag 1, the fluid resistance caused by gas flowing into the edges 5B, 5B on the opposite side of the windshield side is greater than the fluid resistance caused by gas flowing into the looseness 5A on the windshield side. This is because the distance between the inflator and the edges 5B, 5B is longer than the distance between the inflator and the right and left ends of the looseness 5A and further the fluid resistance of the gas flow is increased by the folded bodies 5D, 5D. Therefore, gas flows into the looseness 5A prior to flowing into the edges 5B, 5B so that the bag 1 starts its deployment at the looseness 5A on the windshield side. Since this feature of the deployment can be emphasized by making the fluid resistance of gas flowing into the edges 5B, 5B on the opposite side of the windshield side (the lower side in the drawing) larger than that of gas flowing into the looseness 5A on the windshield side, the number of times of folding the edges 5B, 5B is increased to be larger than the number of times of folding the looseness 5A, if the looseness 5A is folded.

Fig. 1(4A) is a side view of the bag 1 taken from the lateral side thereof, illustrating the third stage of the folding process. The upper side in Fig. 1(4A) is the side near the windshield and the left side in Fig. 1(4A) is the upper side in the direction opposite to the gravity. As shown in Fig. 1(4A), in the third stage of the folding process, a tip portion of the bag 1 is folded, from its tip, several times (four times in the drawing) in bellows. The bellow-like portion thus formed is wrapped in such a manner that the end of the wrapping is positioned on the windshield side (the upper side in the drawing), and then is accommodated in the airbag case 2. The accommodation of the bag 1 in the airbag case 2 using the wrapping method as mentioned above leads an inlet 6 on the windshield side, for allowing gas generated by the inflator 4 to flow into the bag 1. The bag 1 is fixed to the inside of an opening of the airbag case 2 by fittings 10. The fittings 10 not only fixes the bag 1 but also seals the inside of the bag 1 and the inside of the airbag case 2.

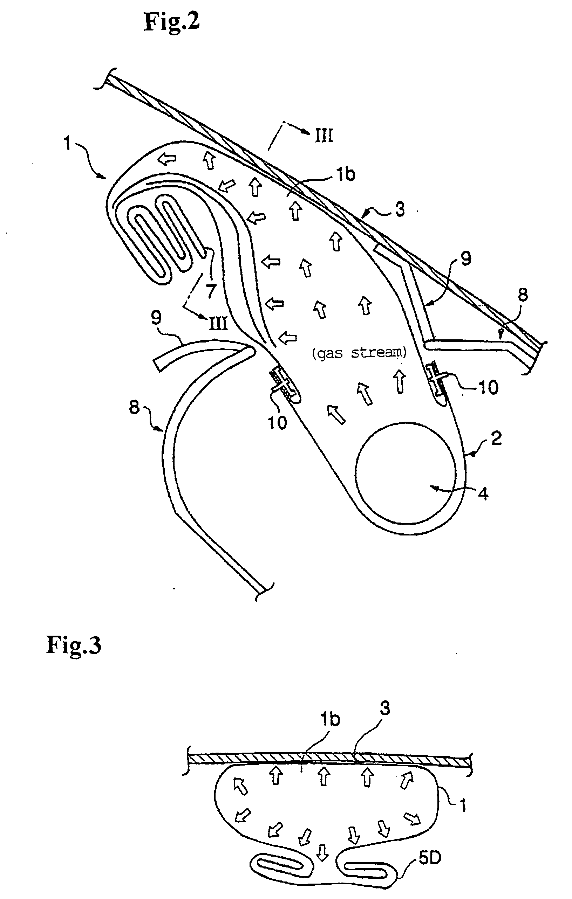

The description will now be made as regard to the configurations of the passenger airbag, which is folded as shown in Figs. 1(1A)-(4A), during its deployment. Fig. 2 is a view showing the configuration of the passenger airbag in its deployment process, and Fig. 3 is a sectional view taken along a dashed line III-III in Fig. 2. In Figs. 2 and 3, as gas generated from the inflator 4 arranged in the airbag case 2 flows into the bag 1 as shown by arrows in the drawings, the airbag cover 9 is broken by the inner pressure of the bag 1 so that the bag 1 is deployed above the instrument panel 8. Since the gas is apt to flow into the (looseness 5A in Fig. 1) windshield side because of the lower fluid resistance than that of the folded bodies 5D, 5D, a contact portion 1b has been already deployed with its released fold when it comes into contact with the windshield. On the other hand, the folded body (core) 7 at the tip of the bag 1, in which still no or little gas enters, is deployed with some time delay from the deployment of the part on the windshield side because the folded body 7 has been folded and rolled up as mentioned with regard to Fig. 1(4C). This prevents the core 7 from directly striking the windshield 3. Therefore, the pressure exerted on the windshield 3 by the bag 1 is reduced and the strike by the core 7 is prevented, thereby avoiding the undesired pressure on the windshield 3.

Hereinafter, variations of the folding method of the embodiment shown in Figs. 1(1A)-1(4A) will now be described.

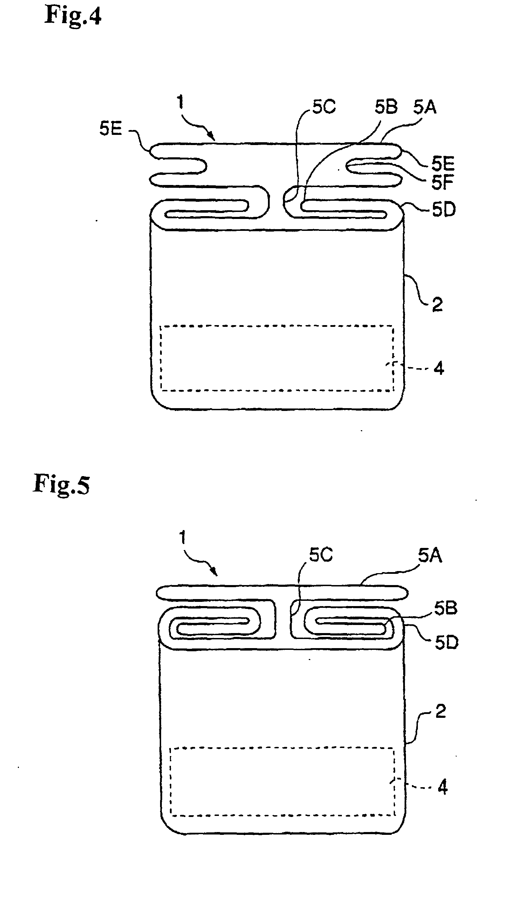

Figs. 4 through 6 show variations of the folding method of the embodiment shown in Figs. 1(1A)-1(4A), each showing each variation in the second stage (the state similar to Fig. 1(3B)). Though the looseness 5A is formed by picking up the upper portion of the bag 1 about the center in the lateral direction thereof in such a manner that the looseness 5A has a width to be accommodated in the airbag case 2 in the embodiment shown in Figs. 1(1A)-1(4A), the width of the looseness 5A can be adjusted by forming recesses 5F, 5F in both side portions 5E, 5E as shown in Fig. 4.

As shown in Fig. 5, the edges 5B, 5B may be rolled up into the concavities 5C, 5C. As shown in Fig. 6, further, the edges 5B, 5B may be folded in plural times in the concavities 5C, 5C.

As mentioned above, in the passenger airbag and the folding method thereof according to this embodiment, the number of rolled or folded portions of the bag on the opposite side of the windshield side is larger than that on the windshield side, so the bag starts its deployment from a part on the windshield side and the rolled or folded bodies of the bag are prevented from being directed toward the windshield.

The bag is provided with a looseness at the center thereof in the lateral direction, on the windshield side, and right and left edges on the opposite side of the windshield side are folded or rolled toward the center so that gas is apt to flow into the looseness on the windshield side during its deployment. Therefore, the bag starts its deployment from the part on the windshield side and the windshield is struck by the portion of the bag, which is inflated with released fold, thereby reducing the pressure on the windshield. The right and left edges are folded or rolled up on the opposite side of the windshield side, thereby preventing the folded or rolled body of the bag from being directed toward the windshield during the deployment of the bag.

The application of undesired local pressure on the windshield by the bag can be prevented, thereby relieving measures, which have been taken, for example, reducing the output of the inflator, adjusting the mount position of the bag and/or the angle for mounting the airbag case, and increasing the strength of the windshield.

## Claims

1. A method of folding an airbag to be deployed in front of a front passenger seat toward an upper portion of a passenger, said airbag comprising a first bag portion (1b) to be arranged on the windshield (3) side and a second bag portion (5B, 5D) to be arranged opposite to the windshield (3) side and facing the passenger and said airbag is formed by steps comprising:
placing the airbag (1) in a plane so that an inlet (6) is located at one side of a rear portion of the airbag (1) to extend laterally,
**characterized by**:
forming a looseness (5A) at a center of the first bag portion (1b), said looseness (5A) having a width substantially corresponding to an inner width of an airbag case (2) to be disposed, and concavities (5C) beneath the looseness (5A) on two lateral sides of the looseness (5A),
folding or rolling right and left edges (5B) of the second bag portion (5B, 5D) toward the center of the airbag (1) along the looseness (5A) to enter the concavities (5C), so that the second bag portion (5B, 5D) after the right and left edges (5B) are folded has a width equal or smaller than the width of the looseness (5A) and
folding or rolling a tip portion of the airbag (1) to the opposite of the windshield (3) side.

2. An airbag to be deployed in front of a front passenger seat toward an upper portion of a passenger, said airbag comprising a first bag portion (1b) to be arranged on the windshield (3) side and a second bag portion (5B, 5D) to be arranged opposite to the windshield (3) side and facing the passenger said airbag being folded according to the method of claim 1 and wherein the first bag portion (1b) is arranged to be deployed prior to the start of deployment of the second bag portion (5B, 5D).

3. An airbag as claimed in claim 2, wherein a number of rolled or folded portions (5D) of the second bag portion (5B, 5D) is larger than that of rolled or folded portions of the first bag portion (1b).

4. An airbag as claimed in claim 2 or 3, wherein a looseness (5A) is provided at a center of the first bag portion (1b).

5. An airbag as claimed in claims 2,3, or 4, comprising a gas path on the opposite side to the windshield (3) side which is longer than a gas path on the windshield (3) side.

## Patentansprüche

1. Verfahren zum Falten eines vor einem Frontpassagiersitz zu einem oberen Abschnitt eines Passagiers hin einzusetzenden Airbags, wobei der Airbag einen auf der Seite der Windschutzscheibe (3) anzuordnenden ersten Sackabschnitt (1b) und einen entgegengesetzt zur Seite der Windschutzscheibe (3) anzuordnenden und dem Fahrgast zugewandten zweiten Sackabschnitt (5B, 5D) aufweist, und der Airbag durch Schritte geformt wird, welche umfassen:
Plazieren des Airbags (1) in einer Ebene so, daß ein Einlaß (6) auf der einen Seite eines hinteren Abschnittes des Airbags (1) sich seitlich erstreckend angeordnet ist,
**gekennzeichnet durch**:
Ausbilden eines losen Teils (5A) an einer Mitte des ersten Sackabschnittes (1b), wobei der lose Teil (5A) eine Breite besitzt, die im wesentlichen einer Innenbreite eines anzuordnenden Airbaggehäuses (2) entspricht, und von Auswölbungen (5C) unterhalb des losen Teils (5A) auf zwei lateralen Seiten des losen Teils (5A),
Falten oder Rollen rechter und linker Ränder (5B) des zweiten Sackabschnittes (5B, 5D) zu der Mitte des Airbags (1) entlang des losen Teils (5A) hin, um in die Hohlräume (5C) so einzutreten, daß der zweite Sackabschnitt (5B, 5D) nachdem die rechten und linken Ränder (5B) gefaltet sind, eine Breite gleich oder kleiner als die Breite des losen Teils (5A) besitzt, und
Falten oder Rollen eines Spitzenabschnittes des Airbags (1) auf die entgegengesetzte Seite der Windschutzscheibe (3).

2. Airbag zum Einsatz vor einem Frontpassagiersitz zu einem oberen Abschnitt eines Passagiers hin, wobei der Airbag einen auf der Seite der Windschutzscheibe (3) anzuordnenden ersten Sackabschnitt (1b) und einen entgegengesetzt zur Seite der Windschutzscheibe (3) anzuordnenden und dem Fahrgast zugewandten zweiten Sackabschnitt (5B, 5D) aufweist, wobei der Airbag gemäß dem Verfahren nach Anspruch 1 gefaltet ist und wobei der erste Sackabschnitt (1b) so angeordnet ist, daß er vor dem Beginn der Einsatzes des zweiten Sackabschnittes (5B, 5D) einsetzbar ist.

3. Airbag nach Anspruch 2, wobei eine Anzahl gerollter oder gefalteter Abschnitte (5D) des zweiten Sackabschnittes (5B, 5D) größer als die von gerollten oder gefalteten Abschnitten des ersten Sackabschnittes (1b) ist.

4. Airbag nach Anspruch 2 oder 3, wobei eine lose Lage (5A) in einer Mitte des ersten Sackabschnittes (1b) vorgesehen ist.

5. Airbag nach Anspruch 2, 3 oder 4, welcher einen Gaspfad auf der entgegengesetzten Seite zu der Seite der Windschutzscheibe (3) aufweist, welcher länger als ein Gaspfad auf der Seite der Windschutzscheibe (3) ist.

## Revendications

1. Procédé de pliage d'un coussin gonflable à déployer à l'avant d'un siège de passager avant de véhicule vers une partie supérieure d'un passager, ledit coussin gonflable comprenant une première portion de coussin (1b) à disposer du côté d'un pare-brise (3) et une seconde portion de coussin (5B,5D ) à disposer à l'opposé du côté pare-brise (3) et en regard du passager, et ledit coussin gonflable est formé par les étapes comprenant :
la mise en place du coussin d'air (1) dans un plan de telle sorte qu'une entrée (6) est située sur un côté d'une portion arrière du coussin d'air (1) pour s'étendre latéralement,
**caractérisé par** :
la formation d'un décollement (5A) au centre de la première portion de sac (1b), ledit décollement (5A) ayant une largeur correspondant sensiblement à une largeur intérieure d'un logement de coussin gonflable (2) à ranger, et de concavités (5C) au-dessous du décollement (5A) sur deux côtés latéraux du décollement (5A),
le pliage ou le roulage des bords droite et gauche (5B) de la seconde portion de coussin (5B,5D) vers le centre du coussin gonflable (1) le long du décollement (5A) pour rentrer les concavités (5 C), de sorte que la seconde portion de coussin (5B,5D), après que les bords droit et gauche (5B) sont pliées, ait une largeur égale ou inférieure à la largeur du décollement (5A) et
le pliage ou roulage d'une portion de pointe du coussin gonflable (1) à l'opposé du côté pare-brise (3)

2. Coussin gonflable à déployer à l'avant d'un siège de passager avant en direction d'une partie supérieure d'un passager, ledit coussin d'air comprenant une première portion de coussin (1b) à disposer du côté d'un pare-brise (3) et une seconde portion de coussin (5B,5D) à disposer à l'opposé du côté pare-brise (3) et en face du passager , ledit coussin d'air étant plié selon le procédé de la revendication 1 et dans lequel la première portion de coussin (1b) est disposée pour se déployer avant le début du déploiement de la seconde portion de coussin (5B,5D).

3. Coussin gonflable selon la revendication 2, dans lequel le nombre de portions enroulées ou pliées (5D) de la seconde portion de coussin (5B ,5D) est plus grand que celui de portions enroulées ou pliées de la première portion de coussin (1b).

4. Coussin gonflable selon la revendication 2 ou 3, dans lequel un décollement (5A) est disposé au centre de la première portion de coussin (1b).

5. Coussin gonflable selon les revendications 2, 3 ou 4, comprenant un passage de gaz sur le côté opposé au côté pare-brise (3) qui est plus long qu'un passage de gaz sur le côté pare-brise (3).
